# EUROPEAN PATENT APPLICATION

(11) **EP 4 570 762 A1**
(43) Date of publication of application: **18.06.2025**
(21) Application number: 23216583.7
(22) Date of filing: 14.12.2023
(51) Int. Cl.: C02F 1/42, C02F 1/66, C02F 1/00

(54) **SYSTEM AND METHOD FOR IMPROVING CLEANING PERFORMANCE IN WASH WATER**

(71) Applicant: Henkel AG & Co. KGaA, 40589 Düsseldorf (DE)
(72) Inventor: Kessler, Arnd, 40789 Monheim am Rhein (DE); Hardacker, Ingo, 46499 Hamminkeln (DE); Ruiz Hernandez, Robert, 40211 Düsseldorf (DE); Linz, Sergio, 50825 Köln (DE); Juckel, Thomas, 40789 Monheim (DE)

(57) **Abstract**

A system and corresponding method for improving cleaning performance in wash water. The system comprises an input, an output, a container in fluid connection with the input and a compartment with an inlet for receiving an alkali agent. The container contains an ionexchange resin with an acidic function, which is arranged to form a flow path for wash water from the input to the output. The resin is configured to release hydroxonium ions and capture a cationic component when wash water flows though the flow path in the container. The compartment enables an interaction of wash water with the alkali agent to adjust a pH of the wash water. In use the input is connected to a water inlet of a water-bearing household appliance and the output to a water circuit of the appliance.

## Description

### TECHNICAL FIELD

The invention relates to the field of cleaning performance improvement by adapting the properties of wash water intended to be used in water-bearing household appliances such as dishwashers and washing machines and more particularly to the treatment of the wash water used together with detergents to perform a cleaning task.

### TECHNOLOGICAL BACKGROUND

Water-bearing cleaning appliances such as dishwashers and washing machines are mostly assumed to be efficient in performing cleaning tasks based on the amount and nature of the cleaning agents used for performing the task and the settings of the appliance (for example: temperature, cleaning cycle duration, time of the dosing of the cleaning agents, rotation of a drum). The nature of the water used in a water-bearing cleaning appliance is however also a parameter that can influence the performance of the appliance.

For example, water hardness is one parameter that can affect the efficiency of the cleaning process. In some European regions such as the Paris area or the North Rhine Westfalia area, water hardness is known to be higher than in Japan for example. Water hardness can typically be observed when water is rich in minerals such as calcium, magnesium carbonates, bicarbonates and sulfates. These minerals form multivalent cations that then react with and form deposits on utensils or surfaces such as pipes. One disadvantage with hard water is then that it can deposit limescale or leave visible stains on utensils. Another disadvantage is that hard water is typically less likely to form foam when mixing with detergents.

To avoid these disadvantages, descaling techniques are commonly implemented to remove a certain amount of the multivalent cations found in hard water. Descaling agents can for example be part of the cleaning agents themselves, in which case it is considered that the detergent is adapted to the water hardness.

Alternatively, washing soda is sometimes added to soften water. However, the presence of additives in wash water to soften water may lead to undesired side effects on the cleaning process itself.

Another commonly used process to soften water, that is not used in water-bearing household appliances, is the use of ion-exchange resins through which hard water flows so as to replace magnesium and calcium ions with a lower concentration of other ions such as sodium or potassium ions. Water reacts with the resin to capture calcium or magnesium ions and releases sodium or potassium ions in the process.

Such ion-exchange resins often lead to a certain change in the composition of water by adding further minerals or by affecting the pH of the water that then becomes more acidic which is not desirable in a cleaning process.

Beyond water hardness, the presence of CO2 dissolved in water leads to the presence of hydrogen carbonate HCO3- which typically leads to the formation of undesirable water spots on utensils in dishwashers. There is therefore another wash water condition that affects the cleaning performance in water-bearing household appliances.

For the above reasons, a device and method for improving cleaning performance in wash water is sought.

### SUMMARY OF THE INVENTION

To address the above need, the invention provides a system for improving cleaning performance in wash water, the system comprising:
- An input for wash water and an output for wash water;
- A container in fluid connection with the input, the container being filled at least partially with an ion-exchange resin comprising at least one acidic function, wherein the ion-exchange resin inside the container is arranged to form a flow path for wash water flowing from the input to the output, wherein the ion-exchange resin is configured to release hydroxonium ions and capture at least one cationic component when wash water flows though the flow path in the container;
- A compartment with an inlet for receiving an alkali agent, so that an interaction of wash water with the alkali agent dispensed into the compartment adjusts a pH of said wash water; wherein the system is further configured to connect the input to a water inlet of a water-bearing household appliance and to connect the output to a water circuit of the water-bearing household appliance.

The above invention provides an efficient and low cost means of modifying the properties of wash water in a controlled way and so as to improve the cleaning performance of a water-bearing household appliance running a cleaning cycle using this modified wash water.

The invention more particularly enables the softening of wash water without adding undesired minerals or chemicals into the wash water. As a result, descaling agents typically added to cleaning agents can be avoided and the cleaning cycle can be run in a more environmental friendly way.

The invention is particularly efficient in reducing the hardness of water, in particular hardness caused by the presence of anions such as calcium or magnesium for example.

Another advantage of the invention is that the non intrusive way used to reduce water hardness, i.e. the use of an ion-exchange resin comprising at least one acidic function, such as for example a radical associated with a proton (a positively charged hydrogen atom), does not introduce undesired minerals or further chemicals into wash water. Ion-exchange resins of the state of the art generally absorb undesired minerals such as calcium or magnesium but at the expense of introducing other elements into water such as sodium, potassium or compound ds thereof.

Water used for cleaning tasks typically comprises some dissolved CO2 which leads to the creation of hydrogen carbonate HCO3-. These ions are typically responsible for water spots on utensils in dishwashers and the elimination of these ions is therefore an additional advantage of the invention. The ion-exchange resin of the invention, that comprises at least one acidic function, absorbs the undesired anions and releases hydroxonium ions H3O+ into the wash water. These hydroxonium ions then react with the hydrogen carbonate according to the following reaction:

H3O+ + HCO3- => 2 H2O + CO2

It is to be noted that the use of the ion-exchange resin of the invention, with at least one acidic function, tends to render the thus treated wash water more acidic by decreasing its pH value. For that reason, the use of this type of ion-exchange resin (comprising at least one acidic function) may at first be considered as disadvantageous for use in a water-bearing household appliance as wash water should not have an acidic pH.

According to the invention, a pH value is considered as being acidic when it is below a pH value of 7 advantageously below a value of 6.

To overcome this situation, the invention provides in addition to the ion-exchange resin, a compartment comprising an inlet for an alkali agent. By dosing an alkali agent, the invention can control the pH value of wash water to benefit from a softened wash water without additional impurities and a suitable pH value for running a cleaning cycle.

The compartment with an inlet allows the controlled dosing of the alkali agent so that the pH value can be selectively adjusted depending on the requirements for an efficient cleaning performance.

According to an embodiment, the system further comprises a gas exhaust configured to extract at least one gas generated from the reaction between hydroxonium ions released from the ion-exchange resin and hydrogen carbonate present in the wash water.

The presence of a gas exhaust can prevent an increase in pressure in the system of the invention and in use with a water-bearing household appliance in the water circuit of that appliance. As can be seen from the above reaction, the reaction of hydrogen carbonate with the hydroxonium ions leads to the formation of carbon dioxide gas. Depending on the amount of hydrogen carbonate present in the wash water the buildup of gas can alter the pressure inside a water circuit in which the wash water flows. The addition of a gas exhaust enables a reduction of this pressure to ensure that pressure in wash water remains at normal operational levels for a water-bearing household appliance.

According to an embodiment, the gas exhaust is configured to allow the at least one gas to exit the system when a gas pressure inside the system exceeds a predetermined threshold value.

The release of excess gas from the system, as explained above, reduces the risk that pressure builds up in the water circuit of a water-bearing household appliance. The invention also enables a controlled release of this excess gas as the pressure is not in principle an issue unless the pressure value exceeds a predetermined threshold value. It can typically be considered that an additional pressure below 0,05 bar is not an issue and would not trigger a release of the excess pressure from the system.

According to an embodiment, the system further comprises a dosing device configured for dispensing a controlled amount of the alkali agent into the system based on a pH of wash water that has flown through the flow path.

The controlled dosing of an alkali agent allows a selection of the pH value of wash water. In particular it also enables a timed control of that change in pH value as the wash water may under some circumstances benefit from a more acidic or a less acidic pH value depending on the cleaning task and the cycle of the cleaning task run by the water-bearing household appliance.

According to an embodiment, the alkali agent is selected from among: OH- ions, potassium hydroxide, sodium hydroxide, ethanolamine, ammonia.

In some circumstances the alkali agent can be one already used for the cleaning task of the water-bearing household appliance. However it can also be an agent used only for the purpose of reducing the acidity of the wash water.

According to an embodiment the ion-exchange resin comprises a polymeric base combined with a hydrogen atom.

The advantage of such a simple setup is that it does not introduce any impurities into wash water.

According to an embodiment the cationic component is at least one among manganese ions, calcium ions, sodium ions, potassium ions, iron ions.

According to an embodiment, the system further comprises:
- a by-pass channel arranged to selectively direct wash water from the input to the output without flowing through the flow path;
- a switch arranged upstream from the by-pass channel to selectively direct wash water to at least one among the by-pass channel and the flow path of the container.

The presence of a by-pass channel and a switch enables a selective channeling of wash water through the ion-exchange resin. Indeed, water hardness cannot be modified in a controlled manner when it flows through the ion-exchange resin. By controlling the amount of wash water that flows through the ion-exchange resin the invention allows a selection of the hardness of water that will later be used in a water-bearing household appliance. In particular, different values of water hardness can be used based on the nature of cleaning agents dosed during the cleaning cycle run by the household appliance so that a higher or lower water hardness can selectively be used for different cleaning tasks or at different phases of a cleaning task.

According to an embodiment, the system further comprises a mixing controller configured to control the switch so that a hardness of wash water is selectively adjusted.

According to an embodiment, the hardness of wash water is controlled using at least one among:
- a timing of the position of the switch to control the amounts of wash water that are channeled to the by-pass channel and to the flow path;
- a selection among incremental positions of the switch configured to divert a selectable portion of wash water to the by-pass channel and to the flow path.

The above solutions can in particular be used with a dosing device that selectively dispenses certain amounts of cleaning agents at different phases of a cleaning cycle. The adjustment of water hardness during the cleaning process offers another level of flexibility in the optimization of the cleaning performance.

The invention also pertains to a method for improving cleaning performance in wash water, the method comprising:
- connecting the input of a system according to any one of the preceding claims to a water inlet of a water-bearing household appliance;
- connecting the output of the system to the water circuit of the water-bearing household appliance;
- dispensing the alkali agent into the compartment to adjust the pH of the wash water, so that the pH of the wash water at the output remains above a predetermined value.

This method is based on the system described above.

According to an embodiment, when the system further comprises:
- a by-pass channel arranged to selectively direct wash water from the input to the output without flowing through the flow path;
- a switch arranged upstream from the by-pass channel to selectively direct wash water to at least one among the by-pass channel and the flow path of the container; the method further comprises:
   - controlling the position of the switch to selectively adjust hardness of the wash water.

The method as described above, wherein the system further comprises a gas exhaust, the method further comprising:
- releasing out of the system an amount of an at least one gas formed from the reaction between hydroxonium ions released from the ion-exchange resin and hydrogen carbonate present in the wash water to maintain pressure inside a water circuit in the water-bearing household appliance below a predetermined pressure value.

The method as described above, further comprising:
- running a cleaning cycle on the water-bearing household appliance.

The method as described above, further comprising, during the cleaning cycle of the water-bearing household appliance:
- adjusting at least one among:
- water hardness of the wash water in the water circuit of the water-bearing household appliance;
- a pH of the wash water in the water circuit of the water-bearing household appliance.

It is in particular possible to add sensors that measure the water hardness upstream from the ion-exchange resin and that measure the pH downstream from the ion-exchange resin so that the water hardness and pH values can be adjusted in a controlled way based on the requirements of these two values for an optimized cleaning performance. The adjustment can occur throughout the cleaning cycle of the water-bearing household appliance for increased flexibility.

### BRIEF DESRIPTION OF THE DRAWINGS

The present disclosure will hereinafter be described in conjunction with the following drawing figures, wherein like numerals denote like elements, and:
Fig. 1 is a schematic representation of a system for improving cleaning performance in wash water according to an exemplary embodiment;
Fig. 2 is a schematic representation of a system for improving cleaning performance in wash water according to a second exemplary embodiment;

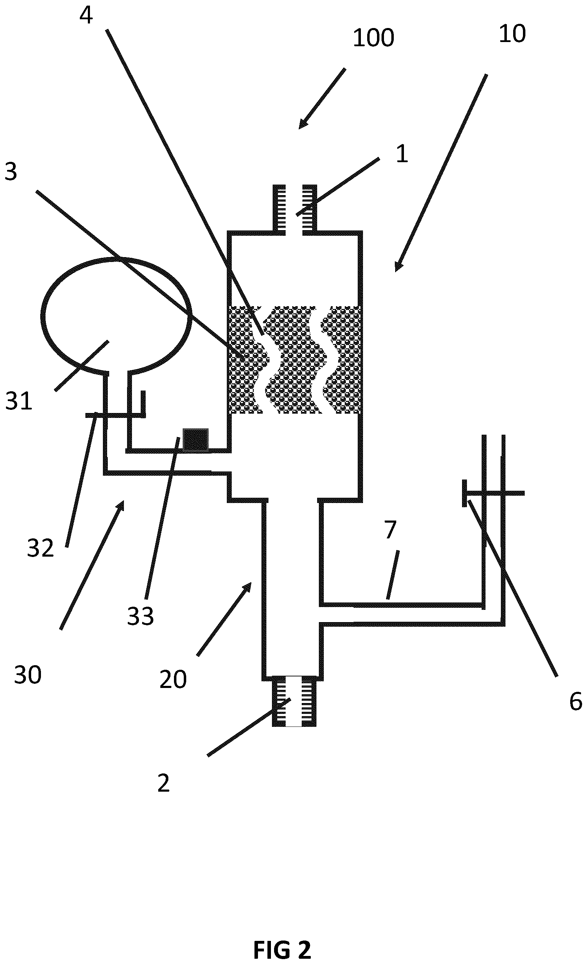

Fig. 2 is a schematic representation of a system for improving cleaning performance in wash water according to a third exemplary embodiment;

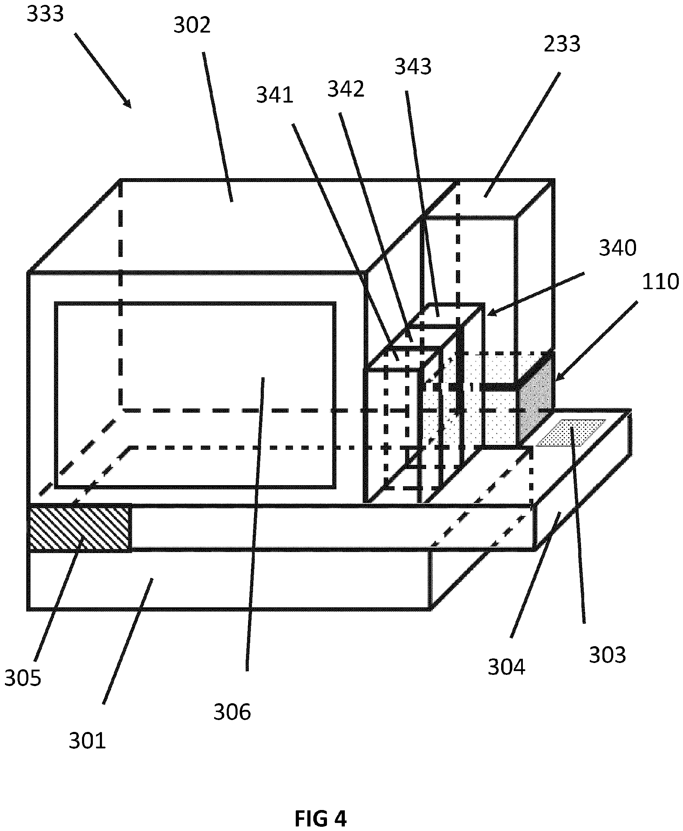

Fig. 4 is a schematic representation of a portable dishwashing device equipped with the system according to one of the other exemplary embodiments;

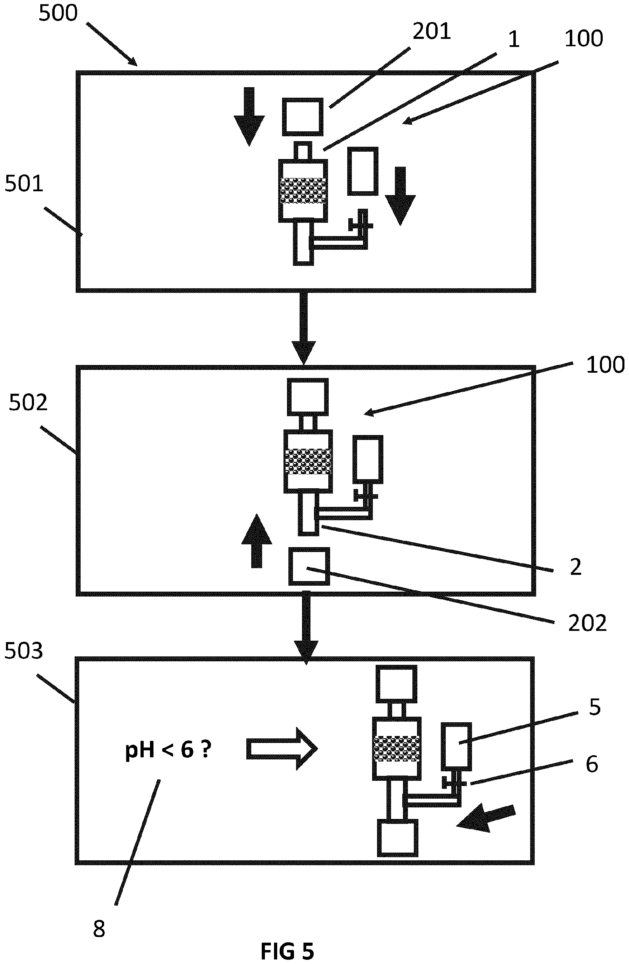

Fig. 5 is a flowchart illustrating steps of an exemplary embodiment of a method for improving cleaning performance in wash water.

### DETAILED DESCRIPTION

The invention provides a system and method for improving the cleaning performance in wash water by adjusting water hardness and pH of wash water while preserving the quality of that wash water and without introducing further impurities that may negatively affect the cleaning performance.

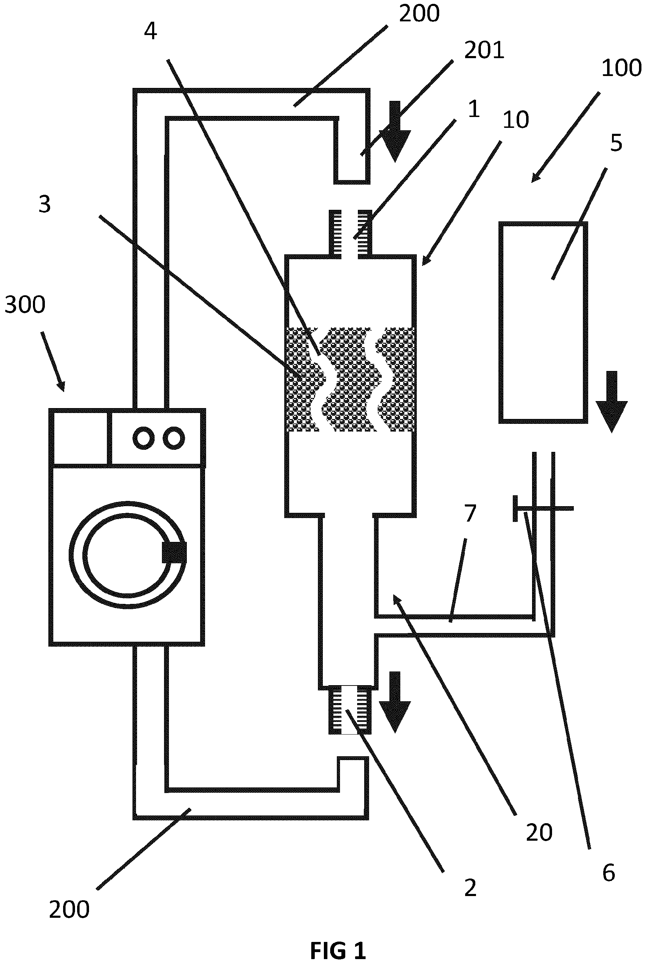

An exemplary system 100 according to the invention is provided on figure 1. This system 100 typically comprises a container 10 inside of which an ion-exchange resin 3 is arranged. The ion-exchange resin 3 comprises at least one acidic function. More specifically the ion-exchange resin 3 can comprise a radical R associated with a proton H which can be schematically expressed as R-H.

The ion-exchange resin 3 can be in the form of beads that fill the container 10 and form a flow path 4 for wash water through the ion-exchange resin 3. There is no restriction on the shape or size of the elements forming the ion-exchange resin 3 so long as wash water can flow through. To ensure an efficient reduction of water hardness it is advantageous to arrange the ion-exchange resin 3 so that water flows through it over a longer distance. This increases the interaction sites and time spent by wash water in contact with the ion-exchange resin 3 to absorb undesired anions such as Ca2+ or Mg2+.

The system 100 further comprises a compartment 20 that comprises an inlet 7 configured to receive an alkali agent. The alkali agent can typically be stored in a cartridge 5 external to the system 100 and the dispensing of the alkali agent can be controlled with a dosing device 6. In a simple implementation the dosing device 6 can be a valve. It is possible to couple the opening and closing of that valve to a processor that can control the dispensing of the alkali agent to achieve the desired pH value in the wash water. The processor can optionally also determine the amounts that should be dispensed and when to dispense these amounts.

The system 100 comprises an input 1 and an output 2. The input 1 can typically be connected to the water inlet 201 of a water-bearing household appliance 300 and the output 2 can typically be connected to the water circuit 200 of the water-bearing household appliance 300.

Deviations from the arrangement illustrated on figure 1 are also compatible with the invention as presented in the appended claims. The compartment 20 can for example be arranged inside the container 10. It is also possible to arrange the compartment and/or the inlet 7 upstream from the container 10. In some embodiments, the compartment 20 and inlet 7 are located separated from the container 10 and are connected to a different portion of the water-bearing household appliance 300 or are part of that appliance.

Figure 2 provides a different arrangement of the system 100 of the invention. As can be seen on figure 2 the system 100 can comprise a gas exhaust 30 that can for example be located downstream from the ion-exchange resin 3 even though the position of the gas exhaust can be selected anywhere in a water circuit (upstream from -, in close contact with -, downstream from - the ion-exchange resin 3). The gas exhaust 30 can comprise a gas collection device 31 such as a balloon. This gas collection device 31 can be place at a location visible to a user so that the user can visually assess the pressure buildup in the water circuit 200 in which the system 100 is used. A pressure sensor 33 can also be arranged in the system 100 or anywhere in the water circuit 200 to control the pressure inside the water circuit.

As further seen on figure 2, the gas exhaust 30 can comprise an exit valve 32. This exit valve can be a one-way valve activated upon a pressure buildup in the water circuit 200 that exceeds a predetermined value (for example an addition pressure above 0,05 bar). The exit valve 32 can also be controlled based on the measured pressure value (for example as measured by the pressure sensor 33).

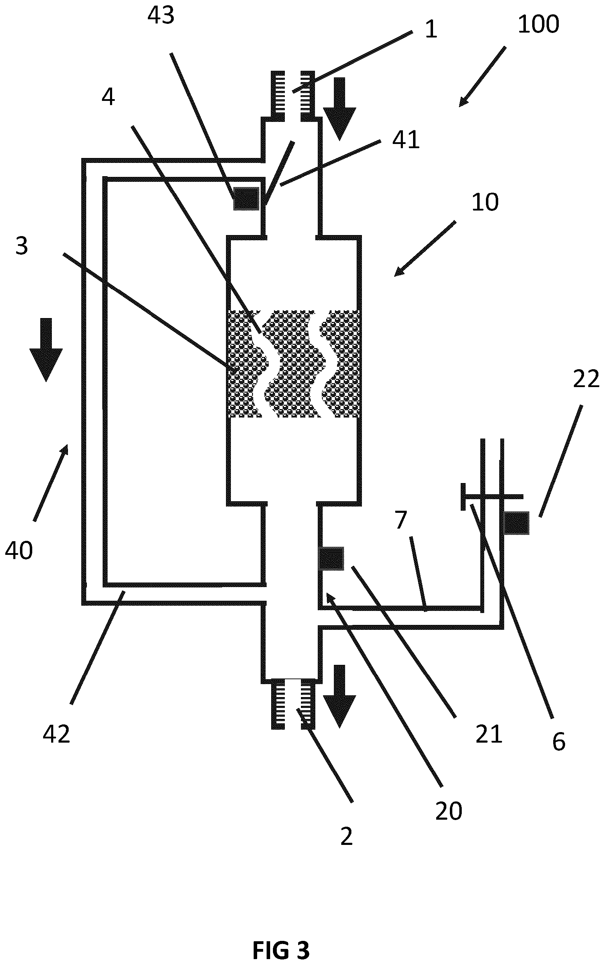

Another advantageous addition to the system 100 described above is illustrated on figure 3. In this example, the system 100 further comprises a by-pass channel 40. This by-pass channel connects a portion upstream from the ion-exchange resin 3 to a portion of the system 100 that is located downstream from the ion-exchange resin 3. A valve 41 arranged at the entrance of the by-pass channel 40 is configured to allow either passage of wash water through the by-pass channel 40 or through the ion-exchange resin 3. Advantageously, the valve 41 is built so as to comprise several incremental positions that can direct a controlled portion of water through both flow paths at the same time. Alternatively, a binary system in which all the wash water flows either through the by-pass channel 40 or through the ion-exchange resin 3 can also be implemented. The by-pass channel 40 comprises some water circuitry to direct the flow of water as explained above.

It is to be noted that the by-pass channel 4 is not limited to the arrangement illustrated on figure 3. It is for example possible to arrange the by-pass channel 40 inside the container 10. In such an arrangement, the by-pass channel would be a separated section of the container 10 that is void of ion-exchange resin.

The advantage of the by-pass channel 40 illustrated on figure 3 is that the water hardness value can be controlled and selected by controlling the position and/or the timing of the position of the switch 41. This provides further flexibility to the system 100 of the invention and allows in particular the change of the water hardness during a cleaning cycle of a water-bearing household appliance 300. If an intermediary water hardness is required, that is not achievable by letting all of the wash water flow through the ion-exchange resin 3, the control of the position of the switch 41 enables to generate a mixture between wash water the water hardness of which is not modified (the portion of wash water that flows through the by-pass channel 40) and wash water the water hardness is reduced by flowing through the ion-exchange resin 3.

The system 100 described above can typically be used as a replaceable item. At least the container 10 comprising the ion-exchange resin 3 can be replaced if needed after extensive use of the system 100. Indeed, the reaction that occurs at the ion-exchange resin 3 can only occur as long as there are enough acidic functions present in the ion-exchange resin 3. Depending on the amount of ion-exchange resin 3 that is present in the container 10, the system 100 is capable of reducing the hardness of a certain amount of water. The speed at which the ion-exchange resin 3 is used up is also dependent on the hardness value of the wash water. It is possible to measure the evolution over time of the efficiency of the ion-exchange resin 3 to reduce water hardness by adding a water hardness measurement sensor downstream from the ion-exchange resin 3.

Figure 4 provides an example of a portable water-bearing household appliance 333 which is a dishwasher, which can benefit from the system 100 of the invention. It is to be noted that any water-bearing household appliance 300 can benefit from the system 100 of the invention and the illustration of figure 4 is only one example.

The dishwashing device 333 can typically be substantially rectangular in shape and have dimensions from 50cm × 50 cm × 50cm to 50cm × 1m x50 cm.

The dishwashing device 333 typically comprises a main housing 302 with a door 306 that is hermetically sealable and openable to include at least one rack on which about ten utensils to be washed can be placed. The main housing 302 may advantageously rest on a base arrangement 304, which can for example comprise pipes establishing a fluid connection between different elements of the dishwashing device 333.

The dishwashing device 333 also comprises a first water tank 233 which is configured to receive a fixed volume of water that will be used during a cleaning cycle performed by the dishwashing device 333. The fixed volume of water may typically be in the range of 1L to 3L, particularly preferably from 1,5L to 2,5L.

The first water tank 233 provides water to the input 1 of a system 110 according to the invention comprising features such as those already described above. This way. Water hardness of the fixed volume of water used to perform the cleaning cycle with the dishwashing device 333 of figure 4 can advantageously be adjusted, in particular to ensure that water hardness is always suitable for a cleaning task even if the source of the wash water does not guarantee an appropriate water hardness or pH value of the wash water.

The first water tank 233 is then further in fluid communication, via the system 110 with the main housing 302 to inject water during the cleaning cycle. The dishwashing device 333 further comprises a second water tank 301, which can for example be placed at a lower point of the dishwashing device 333 so that used wash water in the main housing may flow directly to the lowest point of the dishwashing device 333 after activation of a rinse mechanism. The second water tank 301 may for example be located under the base arrangement 304 and the main housing 302 may have a slanted bottom that leads to a central drainage point. From this central drainage point a fluid communication allows used wash water from the main housing 302 to be directed towards the second water tank 301.

The dishwashing device 333 further comprises a storage compartment 340 that is configured to receive at least one cleaning agent that is injected into the main housing 302. The storage compartment may advantageously comprise several cartridges 341, 342, 343, for example three to six cartridges each containing a different cleaning agent suitable for efficiently performing a cleaning cycle. One cartridge may comprise an enzyme used during the first minutes of the cleaning cycle. Another cartridge may comprise an alkali cleaning agent injected later during the main wash cycle. The alkali cleaning agent can also be used as an alternative to the alkali agent described above, so that the alkali cleaning agent is also used to adjust the pH value of the wash water during the cleaning cycle. A third cartridge may comprise a rinse agent. Each cartridge of the storage compartment 340 is in fluid communication with the main housing to dispensing the at least one cleaning agent in a controlled fashion.

The cartridges can be replaced and/or refilled and the content of these cartridges typically can last for more than one cleaning operation. The volume of cleaning agent in each cartridge may typically be between 10 ml and 1L, preferable in the range of 30 mL to 500 mL, even more preferably in the range of 50 mL to 400 mL.

To control dispensing of water from the first water tank 233, the at least one cleaning agent from the storage compartment 340, activation of cleaning mechanisms inside the main housing 302 and channeling of used wash water from the main housing 302 to the second water tank 301, the dishwashing device 333 comprises a processor 303.

The processor 303 may further comprise a memory storage device for storing preprogrammed cleaning cycles, and wireless communication capabilities to be able to receive instructions from a remote user interface such as an application on a smartphone, tablet smart watch or from any computer, server or remote user interface. The base arrangement 304 may also comprise a user interface to allow a user to input and select a program for the cleaning cycle that he wishes to be performed.

Electrical energy to perform the cleaning cycle, activate the processor 303 can be provided by a power supply device 305, which can be a battery or an accumulator. The dishwashing device 333 does not require a connection to an electrical grid which renders it even more flexible and usable in remote locations, for example in outdoor settings, in the countryside or in situations where water and electricity is not available everywhere.

Alternatively, power supply can be provided by a cable power supply to be plugged into an electrical grid system. Both options can also be made available for increased convenience.

All of the elements described above are arranged so that they can be easily mounted and dismounted from the base arrangement 304, and the elements when mounted do not leak.

This is made possible by the use of valves to control the transfer of fluid and cleaning agent from each container of the dishwashing device 333.

The system 100, 110 described above can be used in a method 500 as described in the appended claims and for which a simplified flowchart is presented on figure 5. Figure 5 comprises three steps 501-503. In a first step 501, the input 1 of the system 100 is connected fluidically to the wash water inlet 201 of a water-bearing household appliance 300. It is to be noted that it is also possible to connect any wash water inlet and that the system 100, 110 of the invention can also be used as a stand-alone filter that delivers a fixed volume of treated wash water.

Step 501 can further comprise the step of providing an alkali tank that is connected to the inlet 6 of the compartment 20 of the system 100, 110.

In step 502, the output 2 of the system 100, 110 is connected to a water circuit 200 of the water-bearing household appliance 300. The water circuit 200 can for that matter comprise a connector 202. Alternatively, the output 2 is connected to a tank that is configured to receive the volume of processed wash water.

In step 503, as wash water flows through the ion-exchange resin 3, controlled dosing of the alkali occurs to adjust the pH value of wash water to compensate for the acidity introduced by the effect of the hydroxonium ions on the wash water as it flows through the ion-exchange resin 3. The dosing can for example occur either based on the volume of wash water that flows through the ion-exchange resin 3 or based on the measured pH value downstream from the ion-exchange resin. As already mentioned above, there is also the possibility of controlling the water hardness by diverting a controlled amount of wash water to by-pass the ion-exchange resin 3. In that case, the dosing of the alkali also takes into consideration the amount of water that flew though the ion-exchange resin 3.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the various embodiments in any way. Rather, the foregoing detailed description will provide those skilled in the art with a convenient road map for implementing an exemplary embodiment as contemplated herein. It being understood that various changes may be made in the function and arrangement of elements described in an exemplary embodiment without departing from the scope of the various embodiments as set forth in the appended claims.

## Claims

1. A system (100, 110) for improving cleaning performance in wash water, the system (100, 110) comprising:
- An input (1) for wash water and an output (2) for wash water;
- A container (10) in fluid connection with the input (1), the container being filled at least partially with an ion-exchange resin (3) comprising at least one acidic function, wherein the ion-exchange resin (3) inside the container (10) is arranged to form a flow path (4) for wash water flowing from the input (1) to the output (2), wherein the ion-exchange resin (3) is configured to release hydroxonium ions and capture at least one cationic component when wash water flows though the flow path (4) in the container (10);
- A compartment (20) with an inlet (7) for receiving an alkali agent, so that an interaction of wash water with the alkali agent dispensed into the compartment (20) adjusts a pH of said wash water;
wherein the system (100, 110) is further configured to connect the input (1) to a water inlet (201) of a water-bearing household appliance (300) and to connect the output (2) to a water circuit (200) of the water-bearing household appliance (300).

2. The system (100, 110) according to claim 1 further comprising a gas exhaust (30) configured to extract at least one gas generated from the reaction between hydroxonium ions released from the ion-exchange resin and hydrogen carbonate present in the wash water.

3. The system (100, 110) according to claim 2, wherein the gas exhaust (30) is configured to allow the at least one gas to exit the system when a gas pressure inside the system exceeds a predetermined threshold value.

4. The system (100, 110) according to any one of the preceding claims, further comprising a dosing device (6) configured for dispensing a controlled amount of the alkali agent into the system (100, 110) based on a pH of wash water that has flown through the flow path (4).

5. The system (100, 110) according to any one of the preceding claims, wherein the alkali agent is selected from among: OH- ions, potassium hydroxide, sodium hydroxide, ethanolamine, ammonia.

6. The system (100, 110) according to any one of the preceding claims, wherein the ion-exchange resin (3) comprises a polymeric base combined with a hydrogen atom.

7. The system (100, 110) according to any one of the preceding claims, wherein the cationic component is at least one among manganese ions, calcium ions, sodium ions, potassium ions, iron ions.

8. The system (100, 110) according to any one of the preceding claims, further comprising:
- a by-pass channel (40) arranged to selectively direct wash water from the input (1) to the output (2) without flowing through the flow path (4);
- a switch (41) arranged upstream from the by-pass channel (40) to selectively direct wash water to at least one among the by-pass channel (40) and the flow path (4) of the container (10).

9. The system (100, 110) according to claim 8, further comprising a mixing controller (43) configured to control the switch (41) so that a hardness of wash water is selectively adjusted.

10. The system (100, 110) according to claim 9, wherein the hardness of wash water is controlled using at least one among:
- a timing of the position of the switch (41) to control the amounts of wash water that are channeled to the by-pass channel (40) and to the flow path (4);
- a selection among incremental positions of the switch (41) configured to divert a selectable portion of wash water to the by-pass channel (40) and to the flow path (4).

11. A method (500) for improving cleaning performance in wash water, the method comprising:
- connecting the input (1) of a system (100, 110) according to any one of the preceding claims to a water inlet (201) of a water-bearing household appliance (300);
- connecting the output (2) of the system to the water circuit (200) of the water-bearing household appliance (300);
- dispensing the alkali agent into the compartment to adjust the pH of the wash water, so that the pH of the wash water at the output remains above a predetermined value.

12. The method (500) of claim 11, wherein the system (100, 110) further comprises:
- a by-pass channel (40) arranged to selectively direct wash water from the input (1) to the output (2) without flowing through the flow path (4);
- a switch (41) arranged upstream from the by-pass channel (40) to selectively direct wash water to at least one among the by-pass channel (40) and the flow path (4) of the container (10); the method (500) further comprising
- controlling the position of the switch (41) to selectively adjust hardness of the wash water.

13. The method (500) according to any one of claims 11 or 12, wherein the system (100, 110) further comprises a gas exhaust (30), the method (500) further comprising:
- releasing out of the system an amount of an at least one gas formed from the reaction between hydroxonium ions released from the ion-exchange resin (3) and hydrogen carbonate present in the wash water to maintain pressure inside a water circuit in the water-bearing household appliance below a predetermined pressure value.

14. The method (500) according to any one of claims 11 to 13, further comprising:
- running a cleaning cycle on the water-bearing household appliance (300).

15. The method (500) according to claim 14, further comprising, during the cleaning cycle of the water-bearing household appliance (300):
- adjusting at least one among:
- water hardness of the wash water in the water circuit (200) of the water-bearing household appliance (300);
- a pH of the wash water in the water circuit (200) of the water-bearing household appliance (300).
